(19) Europäisches Patentamt
European Patent Office
Office européen des brevets

(11) **EP 2 451 861 B1**

(12) **FASCICULE DE BREVET EUROPEEN**

(45) Date de publication et mention
de la délivrance du brevet:
**05.11.2014 Bulletin 2014/45**

(21) Numéro de dépôt: **10726526.6**

(22) Date de dépôt: **30.06.2010**

(51) Int Cl.:
*C08G 69/00* ^(2006.01)    *C08L 77/00* ^(2006.01)

(86) Numéro de dépôt international:
**PCT/EP2010/059271**

(87) Numéro de publication internationale:
**WO 2011/003785 (13.01.2011 Gazette 2011/02)**

(54) **COMPOSITION POLYAMIDE**

POLYAMIDZUSAMMENSETZUNG

POLYAMIDE COMPOSITION

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **09.07.2009 FR 0954755**

(43) Date de publication de la demande:
**16.05.2012 Bulletin 2012/20**

(73) Titulaire: **Rhodia Opérations
93306 Aubervilliers (FR)**

(72) Inventeurs:
• **ORANGE, Gilles
F-69390 Vourles (FR)**
• **MERCIER, Mathilde
F-69003 Lyon (FR)**

• **TOURAUD, Franck
F-38780 Eyzin Pinet (FR)**
• **JEOL, Stéphane
F-69006 Lyon (FR)**
• **DURAND, Roland
F-69720 Saint Bonnet De Mure (FR)**

(74) Mandataire: **Benvenuti, Federica et al
SOLVAY SA
Intellectual Assets Management
Rue de Ransbeek, 310
1120 Bruxelles (BE)**

(56) Documents cités:
**WO-A1-2008/072754     WO-A2-2010/023164
US-A- 5 705 586     US-A- 6 127 514**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne l'utilisation de polyamide contenant des motifs hydroxyaromatiques pour augmenter la résistance aux acides d'une composition polyamide. L'invention concerne aussi une composition polyamide comprenant un polyamide contenant des motifs hydroxyaromatiques et son utilisation pour la fabrication d'articles plastiques divers tels que par exemple des particules calibrées ou des pièces moulées par injection. Ladite composition est notamment utilisée dans le domaine de la récupération de boues, liquides et gaz présents dans des réservoirs souterrains, et en particulier dans le domaine de l'extraction d'hydrocarbures, tels que le pétrole brut ou le gaz naturel.

**ART ANTERIEUR**

Les compositions thermoplastiques à base de polyamide sont des matières premières susceptibles d'être transformées en articles et pièces plastiques, notamment par divers procédés de mise en forme.

Dans de très nombreux domaines d'activité, il peut s'avérer nécessaire de pouvoir disposer de matériaux présentant des performances mécaniques élevées ainsi qu'une haute résistance aux agents chimiques et notamment aux acides. On peut notamment citer comme application les tuyaux et réservoirs dans le domaine automobile ou divers articles obtenus par moulage par injection.

Il existe aussi un besoin dans le domaine des matériaux de filtration (gravel packing) dans le cadre de l'extraction d'hydrocarbures, tels que le pétrole brut ou le gaz naturel. En effet, des matériaux thermoplastiques, notamment en polyamide, sous forme de particules calibrées, sont introduits par pompage dans des réservoirs souterrains pour agir selon un mécanisme de filtration, afin de minimiser l'écoulement de particules fines de roche, sable, et autres impuretés susceptibles d'être présentes dans le réservoir, dans les boues, liquides et gaz devant être extraits du puits. Or, ces matériaux de filtration sont nettoyés par injection d'acides ou de boues acides, notamment de type HCl et/ou HF.

Toutefois, au vue des températures et pressions exercées sur le polyamide dans certaines applications, notamment dans les technologies gravel packing, il est difficile de trouver des formulations, notamment à base de polyamides conventionnels, présentant de bonnes résistances aux acides et permettant de répondre au cahier des charges pour cette application dans le cadre de l'extraction d'hydrocarbures.

**INVENTION**

La demanderesse a découvert de manière tout a fait surprenante que l'utilisation de polyamide contenant des motifs phénoliques hydroxyaromatiques dans une composition à base de polyamide permettait d'augmenter de façon très importante la résistance aux acides de ladite composition polyamide, notamment aux formulations comprenant de l'HCl et/ou HF.

La présente invention concerne ainsi l'utilisation d'un composé hydroxyaromatique pour augmenter la résistance aux acides d'un polyamide ou une composition polyamide.

La présente invention concerne aussi l'utilisation de polyamide contenant des motifs hydroxyaromatiques chimiquement liés à la chaîne du polyamide pour augmenter la résistance aux acides d'une composition polyamide.

La présente invention concerne notamment l'utilisation d'un polyamide modifié par un composé contenant au moins un groupement hydroxyle aromatique et étant chimiquement lié à la chaîne polymère, le polyamide modifié étant obtenu par polymérisation, outre les monomères du polyamide, d'un composé hydroxyaromatique ou par mélange en phase fondue d'un polyamide partiellement ou totalement formé avec un composé hydroxyaromatique, notamment lors d'une extrusion réactive. Le polyamide modifié selon l'invention peut également être obtenu par polycondensation en phase solide ou en phase solvant pour certains polyamides.

Les monomères du polyamides peuvent notamment être des monomères diacides, notamment aliphatique, cycloaliphatique, arylaliphatique ou aromatique, des monomères diamines, notamment aliphatiques, et/ou des aminoacides ou lactames. Ce sont généralement les monomères classiquement utilisés pour la fabrication de polyamides semi-cristallins, tels que les polyamides aliphatiques, polyamides semi-aromatiques et plus généralement, les polyamides linéaires obtenus par polycondensation entre un diacide saturé aliphatique ou aromatique, et une diamine primaire saturée aromatique ou aliphatique, les polyamides obtenus par condensation d'un lactame, d'un aminoacide ou les polyamides linéaires obtenus par condensation d'un mélange de ces différents monomères. Plus précisément, ces copolyamides peuvent être, par exemple, le polyadipamide d'hexaméthylène, les polyphtalamides obtenus à partir d'acide téréphtalique et/ou isophtalique, les copolyamides obtenus à partir d'acide adipique, d'hexaméthylène diamine et de caprolactame.

Les monomères des polyamides peuvent éventuellement contenir des insaturations ou des hétéroatomes tels l'oxygène, le soufre, l'azote.

On peut notamment utiliser les polyamides choisis dans le groupe comprenant le polyamide 6, le polyamide 66, le polyamide 6.10, le polyamide 11, le polyamide 12, le polyamide 6.12, le poly(méta-xylylène adipamide) (MXD6), le polyamide 66/6T, le polyamide 66/6I les mélanges et copolyamides, tels que le copolyamide 6.66 par exemple. La composition de l'invention peut également comprendre les copolyamides dérivés notamment des polyamides ci-dessus, ou les mélanges de ces polyamides ou copolyamides.

Les polyamides préférés sont le polyhexaméthylène adipamide, le polycaprolactame, ou les copolymères et mélanges entre le polyhexaméthylène adipamide et le polycaprolactame.

Les acides dicarboxyliques peuvent également être choisis parmi l'acide glutarique, l'acide adipique, l'acide pimellique, l'acide subérique, l'acide azélaïque, l'acide sébacique, l'acide dodécanedioïque ; l'acide 1,2-ou 1,3-cyclohexane dicarboxylique ; l'acide 1,2-ou 1,3-phénylène diacétique ; l'acide 1,2-ou 1,3-cylohexane diacétique ; l'acide isophthalique ; l'acide téréphthalique ; l'acide 4,4'-benzophénone dicarboxylique; l'acide 2,5-naphthalène dicarboxylique; et l'acide p-t-butyl isophthalique. L'acide dicarboxylique préféré est l'acide adipique.

Les diamines peuvent par exemple être choisies parmi l'hexaméthylène diamine ; la butane diamine ; la pentane diamine ; la 2-méthyl pentaméthylène diamine ; la 2-méthyl hexaméthylène diamine ; la 3-méthyl hexa-méthylène diamine ; la 2,5-diméthyl hexaméthylène diamine ; la 2,2-diméthylpentaméthylène diamine ; la nonane diamine ; la décanediamine ; la 5-méthylnonane diamine ; la dodécaméthylène diamine ; la 2,2,4-et 2,4,4-triméthyl hexaméthylène diamine ; la 2,2,7,7-tétraméthyl octaméthylène diamine ; l'isophorone diamine ; le diaminodicyclohexyl méthane et les diamines aliphatiques en C2 -C16 qui peuvent être substituées par un ou plusieurs groupements alkyles. La diamine préférée est l'hexaméthylène diamine.

Le polyamide modifié de l'invention peut être obtenu à partir notamment d'un monomère lactame ou un aminoacide, de préférence aliphatique. A titre d'exemple de tels lactames ou aminoacides, on peut citer le caprolactame, l'acide 6-aminohexanoïque, l'acide 5-aminopentanoïque, l'acide 7-aminoheptanoïque, l'acide 11-aminoundécanoïque, le dodécanolactame.

Ces polyamides peuvent notamment être modifiés par des monomères difonctionnels ou monofonctionnels, tels que notamment des diacides ou diamines, monoacides ou monoamines. Des molécules polyfonctionnelles, au moins trifonctionnelles, peuvent également être utilisées pour apporter des ramifications ou branchements au polyamide. On citera par exemple la bishexaméthylènetriamine.

Le composé hydroxyaromatique est un composé portant au moins une, notamment une ou deux, fonctions capables de réagir avec les fonctions amines ou acides du polyamide ou des monomères du polyamide.

Par « groupement hydroxyle aromatique », on entend une fonction hydroxyle rattachée à un atome de carbone faisant partie d'un cycle aromatique.

Par « composé hydroxyaromatique », on entend un composé organique comportant au moins un groupement hydroxyle aromatique.

Par « chimiquement lié » on entend lié par une liaison covalente. Une fois chimiquement lié à la chaîne polyamide, le composé hydroxyaromatique devient un motif hydroxyaromatique et le polyamide modifié de l'invention est un polyamide contenant des motifs hydroxyaromatiques.

Les fonctions du composé hydroxyaromatique pouvant réagir avec les fonctions du polyamides sont notamment les fonctions acide et amine.

Par « fonction acide » on entend une fonction acide carboxylique ou dérivée, telles que chlorure d'acide, anhydride d'acide, amide, ester.

Les groupements hydroxyle aromatique de l'invention ne sont pas considérés comme des fonctions réagissant avec les fonctions acide.

Avantageusement le groupement hydroxyle du monomère n'est pas encombré, c'est-à-dire par exemple que les atomes de carbone situés en α de la fonction hydroxyle ne sont de préférence pas substitués par des substituants encombrants, tels que des alkyles ramifiés.

Le composé hydroxyaromatique est choisi dans le groupe comprenant : l'acide 2-hydroxytéréphtalique, l'acide 5-hydroxyisophtalique, l'acide 4-hydroxyisophtalique, l'acide 2,5-dihydroxytéréphtalique, l'acide 4-hydroxyphénylacétique ou l'acide gallique, l'acide 4-hydroxyphénylacétique, le 3,5-diaminophénol, le 5-hydroxy m-xylylène diamine, l'amino-3 phénol, l'amino-3 méthyl-4 phénol, et l'acide hydroxy-3 amino-5 benzoïque.

Dans le cadre de l'invention, des mélanges de différents composés hydroxyaromatiques peuvent être mis en oeuvre.

La proportion molaire de composé hydroxyaromatique par rapport à l'ensemble des monomères constituants le polyamide, par exemple la somme des monomères diacide, diamine, aminoacides et le composé hydroxyaromatique, est généralement comprise entre 0,1 et 100 %, préférentiellement entre 1 et 70 %, plus préférentiellement entre 0,5 et 60 %, encore plus préférentiellement comprise entre 2,5 et 50 %.

Le polyamide de l'invention est notamment obtenu par un procédé de polymérisation à l'état fondu des différents monomères décrits ci-dessus, ces monomères étant présents en totalité ou en partie.

Par l'expression « polymérisation à l'état fondu » on entend que la polymérisation est réalisée à l'état liquide, et que le milieu de polymérisation ne contient pas de solvant autre que de l'eau, éventuellement. Le milieu de polymérisation peut par exemple être une solution aqueuse comprenant les monomères, ou un liquide comprenant les monomères. Avantageusement le milieu de polymérisation comprend de l'eau comme solvant. Cela facilite l'agitation du milieu, et donc son homogénéité. Le milieu de polymérisation peut également comprendre des additifs tels que des limiteurs de chaîne. Le polyamide modifié de l'invention est généralement obtenu par polycondensation entre les différents monomères, présents en totalité ou en partie, pour former des chaînes polyamides, avec formation du produit d'élimination, en particulier l'eau, dont une partie peut se vaporiser. Le polyamide modifié de l'invention est généralement obtenu, par chauffage à température et pression élevées, par exemple d'une solution aqueuse comprenant les monomères, ou d'un liquide comprenant les monomères, pour évaporer le produit d'élimination, en particulier l'eau (présente initialement dans le milieu de polymérisation et/ou formée lors de la polycondensation) tout en évitant toute formation de phase solide afin d'éviter une prise en masse.

La réaction de polycondensation est généralement effectuée à une pression d'environ 0,5-3,5 MPa (0,5-2,5 MPa) à une température d'environ 100-320°C (180-300°C). La polycondensation est généralement poursuivie en phase fondue à pression atmosphérique ou réduite de manière à atteindre le degré d'avancement souhaité.

Le produit de polycondensation est un polymère ou prépolymère fondu. Il peut comprendre une phase vapeur essentiellement constituée de vapeur du produit d'élimination, en particulier d'eau, susceptible d'avoir été formée et/ou vaporisée.

Ce produit peut être soumis à des étapes de séparation de phase vapeur et de finition afin d'atteindre le degré de polycondensation désiré. La séparation de la phase vapeur peut par exemple être réalisée dans un dispositif de type cyclone. De tels dispositifs sont connus.

La finition consiste à maintenir le produit de polycondensation à l'état fondu, sous une pression voisine de la pression atmosphérique ou sous pression réduite, pendant un temps suffisant pour atteindre le degré d'avancement désiré. Une telle opération est connue de l'homme du métier. La température de l'étape de finition est avantageusement supérieure ou égale à 100°C et dans tous les cas supérieure à la température de solidification du polymère. Le temps de séjour dans le dispositif de finition est de préférence supérieur ou égal à 5 minutes.

Le produit de polycondensation peut également subir une étape de post-condensation en phase solide. Cette étape est connue de l'homme du métier et permet d'augmenter le degré de polycondensation à une valeur souhaitée.

Le procédé de l'invention est similaire dans ses conditions au procédé classique de préparation de polyamide du type de ceux obtenus à partir d'acides dicarboxyliques et de diamines, en particulier du procédé de fabrication de polyamide 66 à partir d'acide adipique et d'hexaméthylène diamine. Ce procédé de fabrication de polyamide 66 est connu de l'homme du métier. Le procédé de fabrication de polyamide du type de ceux obtenus à partir d'acides dicarboxyliques et de diamines utilise généralement comme matière première, un sel obtenu par un mélange en quantité stoechiométrique en général dans un solvant comme l'eau, d'un diacide avec une diamine. Ainsi, dans la fabrication du poly(hexaméthylène adipamide), l'acide adipique est mélangé avec de l'hexaméthylène diamine généralement dans de l'eau pour obtenir de l'adipate d'hexaméthylène diammonium plus connu sous le nom de sel Nylon ou "Sel N".

Ainsi, lorsque le procédé de l'invention met en oeuvre un diacide et une diamine, ces composés peuvent être introduits, au moins en partie, sous la forme d'un sel. En particulier lorsque le diacide est l'acide adipique et la diamine l'hexaméthylène diamine, ces composés peuvent-être introduits au moins en partie sous forme de sel N. Ceci permet d'avoir un équilibre stoechiométrique. De même lorsque le composé hydroxyaromatique est un diacide ou une diamine, il est également possible de l'introduire sous forme de sels, avec une diamine ou un diacide.

Le procédé de l'invention conduit généralement à un polymère statistique lorsque le composé hydroxyaromatique est polyfonctionnel, notamment au moins difonctionnel, et à un polyamide ayant partiellement ou totalement des terminaisons hydroxyaromatique lorsque le composé hydroxyaromatique est monofonctionnel.

Le polyamide modifié obtenu à la fin de l'étape de finition peut être refroidi et mis sous forme de granulés.

Le polyamide modifié obtenu par le procédé de l'invention sous forme fondue peut être directement mis en forme ou être extrudé et granulé, pour une mise en forme ultérieure après fusion.

Le polyamide modifié de l'invention présente l'avantage d'être aisément transformable en voie fondue, comme les polyamides aliphatiques par exemple, ce qui facilite sa mise en forme. De plus il présente des propriétés thermomécaniques améliorées, par exemple ils présentent une température de transition vitreuse plus élevée que les polyamides aliphatiques. Enfin ils montrent de meilleures propriétés de reprise en eau par rapport aux polyamides aliphatiques

Pour améliorer les propriétés mécaniques d'une composition polyamide selon l'invention, il peut être avantageux de lui adjoindre au moins une charge de renfort et/ou de remplissage, telles que des charges fibreuses ou non, préférentiellement choisie dans le groupe comprenant les fibres de verre, les fibres de carbone, les fibres aramides, les argiles, le kaolin, le mica, la wollastonite, la silice, le talc, le graphite, le carbure de silicium ou des nanoparticules. Le taux d'incorporation en charge de renfort et/ou de remplissage est conforme aux standards dans le domaine des matériaux composites. Il peut s'agir par exemple d'un taux de charge de 1 à 80 %, de préférence de 10 à 70 %, notamment entre 20 et 60 %.

Pour l'application « gravel packing », on préfère notamment les charges connues pour leur résistance aux acides, telles que le graphite et le carbure de silicium.

On peut par exemple utiliser une composition polyamide comprenant 70 à 90 % en poids d'un polyamide contenant de 1 à 70 % en mole de motifs hydroxyaromatiques et de 10 à 30 % en poids de graphite ou de carbure de silicium, par rapport au poids total de la composition.

La composition selon l'invention peut en outre comprendre des additifs usuellement utilisés pour la fabrication de compositions polyamides destinées à être moulées. Ainsi, on peut citer les lubrifiants, les agents ignifugeants, les plastifiants, les nucléants, les catalyseurs, les agent d'amélioration de la résilience comme des élastomères éventuellement greffés, les stabilisants lumière et/ou thermique, les antioxydants, les antistatiques les colorants, les pigments, les matifiants, les additifs d'aide au moulage ou autres additifs conventionnels.

Pour la réalisation d'une composition polyamide, ces charges et additifs peuvent être ajoutés au polyamide modifié par des moyens usuels adaptés à chaque charge ou additif, tels que par exemple lors de la polymérisation ou en mélange en fondu.

Il est parfaitement possible de mélanger le polyamide modifié tel que décrit précédemment avec un autre polymère thermoplastique, notamment un polyamide, polyoléfine, ABS ou polyester, de façon a réaliser des mélanges.

Dans un cas particulier de l'invention, un polyamide contenant des motifs hydroxyaromatique peut être ajouté à un polyamide par voie fondue, notamment lors d'une étape d'extrusion du polyamide, ou par voie solide dans un mélangeur mécanique ; le mélange solide pouvant ensuite être mis en fusion, par exemple par un procédé d'extrusion.

Le polyamide contenant des motifs hydroxyaromatiques peut également être utilisée, en tant qu'additif, notamment pour conférer certaines propriétés, notamment rhéologiques, dans des compositions comprenant en tant que matrice un polymère thermoplastique, notamment un (co)polyamide. L'invention concerne ainsi un procédé de fabrication d'une composition dans laquelle on mélange à froid ou en fondu une composition polyamide comprenant un polyamide contenant des motifs hydroxyaromatiques avec une composition thermoplastique, notamment à base de (co)polyamide. Le mélange à froid peut ensuite être mis en fusion, par exemple par un procédé d'extrusion.

La composition polyamide comprenant un polyamide contenant des motifs hydroxyaromatiques peut également comprendre une forte proportion d'additifs et être par exemple utilisée comme mélange maître (masterbatch) destiné à être mélangée à une autre composition thermoplastique, notamment à base de polyamide.

Les compositions selon l'invention peuvent être utilisées comme matière première dans le domaine des plastiques techniques, par exemple pour la réalisation d'articles obtenus par moulage par injection, par injection/soufflage, par extrusion ou par extrusion soufflage. Selon un mode de réalisation usuel, on extrude le polyamide modifié sous forme de joncs, par exemple dans un dispositif d'extrusion bi-vis, qui sont ensuite découpés en granulés. Les pièces moulées sont ensuite réalisées par fusion des granulés produits ci-dessus et alimentation de la composition à l'état fondu dans des dispositifs de moulage par injection.

On peut citer comme articles selon l'invention, des tubes, réservoirs et récipients, tels que des tubes de refroidissement, des carters d'eau de refroidissement, des tuyaux de guidage de l'air de moteur, des tuyaux pour le circuit à huile.

Selon un autre aspect, la composition polyamide de l'invention peut également être utilisée en tant que filtre (gravel pack) dans le domaine de la récupération de boues, liquides et gaz présents dans des réservoirs souterrains, et en particulier dans le domaine de l'extraction d'hydrocarbures, tels que le pétrole brut ou le gaz naturel. À cet effet, la composition de l'invention, avantageusement sous forme de particules calibrées de tailles et formes variables, est introduit par pompage dans le réservoir souterrain pour agir selon un mécanisme de filtration, afin de minimiser l'écoulement de particules fines de roche, sable, et autres impuretés susceptibles d'être présentes dans le réservoir, dans les boues, liquides et gaz devant être extraits du puits. Une telle opération de « gravel packing » requiert de quelques centaines à quelques milliers de kg, par exemple environ 0,5 tonne à environ 5 tonnes de matériau selon l'invention. On peut notamment utiliser pour cette application des particules calibrées, telles que des granulés, des billes et/ou des cylindres aplatis ou non, présentant une granulométrie moyenne (D50) comprise entre 0,2 et 2 mm, préférentiellement comprise entre 0,5 et 1,5 mm, notamment selon la norme ISO 13320-1.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

## PARTIE EXPERIMENTALE

Teneurs en groupements terminaux acide (GTC) et amine (GTA) : dosées par potentiométrie, exprimées en meq/kg. Les teneurs en groupements terminaux phénol GTP (pour les composés hydroxyaromatiques monofonctionnels) sont déterminés à partir des quantités initiales de réactifs introduits dans le réacteur de synthèse.

Masse molaire moyenne en nombre déterminée par la formule Mn=2.10[6]/(GTA+GTC+GTP) et exprimées en g/mol.

Température de fusion ($T_f$) et enthalpie associée ($\Delta$Hf), température de cristallisation au refroidissement ($T_c$) : déterminées par calorimétrie différentielle à balayage (DSC « Differential Scanning Calorimetry »), à l'aide d'un appareil Perkin Elmer Pyris 1, à une vitesse de 10°C/min.

Température de transition vitreuse ($T_g$) déterminées sur le même appareil à une vitesse de 40 °C/min.

<u>**Exemple 1**</u> : **préparation d'un copolyamide PA 66/6HIA 95/5 molaire ou 94,2/5,8 en poids**

Dans un réacteur de polymérisation sont introduits 87,3 kg (332,8 mol) de sel N (sel 1:1 d'hexaméthylène diamine et d'acide adipique), 3219 g d'acide 5-hydroxyisophtalique à 99,5% (HIA) (17,5 mol), 6276 g d'une solution d'hexaméthylène diamine (HMD) en solution dans l'eau à 32,4 % en poids (17,5 mol) et 81,2 kg d'eau déminéralisée et 6,4 g d'agent antimousse Silcolapse 5020®.

Le copolyamide est fabriqué selon un procédé standard de polymérisation de type polyamide 66, avec 35 minutes de finition.

Le polymère obtenu est coulé sous forme de jonc, refroidi et mis sous forme de granulé par coupe des joncs.

Le polymère obtenu présente les caractéristiques suivantes : GTC = 78,4 meq/kg, GTA = 57,6 meq/kg, Mn = 14 700 g/mol.

Le copolyamide est semi-cristallin et a les caractéristiques thermiques suivantes : Tg= 76,8 °C, Tc= 218,4 °C, Tf= 256,2 °C, $\Delta$Hf = 62,5 J/g. Le copolyamide a une Tg supérieure de 6,2 °C par rapport à celle du PA 66.

<u>**Exemple 2**</u> : **préparation d'un copolyamide PA 66/6HIA 85/15 molaire ou 83/17 en poids**

Dans un réacteur de polymérisation sont introduits 76,9 kg (293,1 mol) de sel N (sel 1:1 d'hexaméthylène diamine et d'acide adipique), 9462 g d'acide 5-hydroxyisophtalique à 99,5% (HIA) (51,7 mol), 18624 g d'une solution d'hexaméthylène diamine (HMD) en solution dans l'eau à 32,25 % en poids (51,7 mol) et 72,6 kg d'eau déminéralisée et 6,4 g d'agent antimousse Silcolapse 5020®.

Le copolyamide est fabriqué selon un procédé standard de polymérisation de type polyamide 66, avec 35 minutes de finition.

Le polymère obtenu est coulé sous forme de jonc, refroidi et mis sous forme de granulé par coupe des joncs.

Le polymère obtenu présente les caractéristiques suivantes : GTC = 82,7 meq/kg, GTA = 61,5 meq/kg, Mn = 13 870 g/mol.

Le copolyamide est semi-cristallin et a les caractéristiques thermiques suivantes : Tg= 85,8 °C, Tc= 186,2 °C, Tf= 240,4 °C, $\Delta$Hf = 41,9 J/g. Le copolyamide a une Tg supérieure de 15,2 °C par rapport à celle du PA 66.

<u>**Exemple 3**</u> : **préparation d'un polyamide PA 6HIA et de mélange PA 66/PA 6HIA 85/15 en poids**

Un sel 6HIA à 51% en poids dans l'eau est réalisé par mélange d'un quantité stoechiométrique d'hexaméthylène diamine et d'acide 5-hydroxyisophtalique dans l'eau. Dans un réacteur de polymérisation sont ensuite introduits 5623 g de sel 6HIA à 51%, 112,1 g d'acide 5-hydroxyisophtalique à 99,5%, 105 g d'eau et 3,3 g d'agent antimousse.

Le polyamide PA 6HIA est fabriqué selon un procédé standard de polymérisation de type polyamide 66, avec 30 minutes de finition. Le polymère obtenu est coulé sous forme de jonc, refroidi et mis sous forme de granulé par coupe des joncs. Le polymère obtenu est amorphe et présente une température de transition vitreuse de Tg= 166,6,8 °C.

Le PA 66 et le PA 6HIA ainsi préparé sont mélangés dans une proportion 85/15 en poids en voie fondu dans un micro-extrudeur (« micro-compounder ») DSM MIDI 2000 (15 cm[3]) à une température de 275 °C.

<u>**Exemple 4**</u> : **préparation d'un polyamide PA 66 fonctionnalisé phénol par un monoacide-phénol**

Dans un réacteur de polymérisation sont introduits 135,2 g de sel N (0,52 mol), 9,41 g d'acide 4-hydroxyphénylacétique à 98 % (0,06 mol), 10,87 g d'une aqueuse solution d'hexaméthylène diamine à 32,4% (0,03 mol) et 127,2 g d'eau déminéralisée et 2 g d'un agent antimousse.

Le polyamide est fabriqué selon un procédé standard de polymérisation de type polyamide 66 avec 30 minutes de finition.

Le polymère obtenu est coulé sous forme de jonc, refroidi et mis sous forme de granulé par coupe des joncs.

Le polymère obtenu présente les caractéristiques suivantes :

GTC = 103,3 meq/kg, GTA = 29,4 meq/kg. On calcule la quantité théorique de fonctions phénol en extrémité de chaîne GTP d'après les quantités initiales introduites dans le réacteur. GTP = 437 meq/kg. Mn = 2.10[6]/(GTA + GTC

+ GTP) = 3510 g/mol .

Le polyamide PA 66 fonctionnalisé phénol par l'acide 4-hydroxyphenylacétique est semi-cristallin et a les caractéristiques thermiques suivantes : Tc= 231,9 °C, Tf= 259 °C, DHf = 81,5 J/g.

**Exemple 5** : **évaluation de la tenue aux acides**

Les essais présentés ci-dessous sont inspirés de la norme API RP 58 (American Petroleum Institute).

Mode opératoire

*Préparation des échantillons*

1) On prépare des granulés de polyamide contenant des motifs hydroxyaromatiques soit par une synthèse en réacteur de polycondensation suivie d'une extrusion et granulation (exemples 1,2 et 4), soit par mélange en fondu dans une extrudeuse bi-vis d'un polyamide 66 et des proportions variables d'un polyamide contenant des motifs hydroxyaromatiques suivi d'une granulation (exemple 3).

2) 15g de billes (obtenues par coupe en tête noyée) ou de granulés (issus de la partie précédente) sont placés dans un cristallisoir. On sèche lesdits billes ou granulés à l'étuve pendant 48h sous vide sous balayage azote à 80°C. On récupère les billes ou granulés, et on les place dans un dessiccateur pour qu'ils reviennent à température ambiante. On mesure alors la teneur en eau du polymère $m_{eau}$ avec un appareil Karl Fischer.

*Test 65°C 30 minutes dans HCL 15 %*

On pèse 5 g d'échantillon à tester avec une balance de précision METTLER AE 240 (précision vérifiée de $3.10^{-3}$ g). On obtient ainsi la **masse initiale $m_{polymère}°$.** On place l'échantillon dans un réacteur de 250 ml à fond plat. On ajoute 100 ml de solution d'acide chlorhydrique à 15% (solution préparée par dilution d'une solution d'acide chlorhydrique à 30%). L'éprouvette utilisée présente une précision de +/- 1.0 ml à 20°C. On referme le réacteur. Le test se réalise sans agitation. On met un léger balayage d'azote (vérification grâce au bulleur à l'entrée et à la sortie du réacteur). On plonge le réacteur dans le bain d'huile à 65°C et on met en route le chronomètre dès l'immersion du réacteur. Le test dure 30 min.

En fin de test, on démonte le réacteur et on filtre la solution sur un papier filtre plissé. On rince à l'eau déminéralisée et on mesure le pH.

On récupère la substance filtré que l'on place dans un bécher. On ajoute 200 ml d'eau déminéralisée avec un agitateur magnétique et l'on place le bécher sur une plaque d'agitation pendant une heure. On vérifie alors le pH avec du papier pH pour suivre l'évolution de la concentration en HCl. On refait le lavage deux fois en notant le pH de chaque fin de lavage.

A la fin des lavages, on récupère la substance dans une capsule en aluminium. On laisse la substance une nuit sous hotte ventilée. On pèse enfin le papier filtre.

On sèche la substance à l'étuve pendant 48h sous vide sous balayage azote à 80°C. On place alors la substance dans un dessiccateur pour qu'il revienne à température ambiante. On pèse la substance et on obtient ainsi la **masse finale mpolymère$^f$.**

Remarque : Un dosage des chlorures après le test sur plusieurs échantillons a été effectué. Il reste environ moins de 0,1 % de Cl$^-$ dans l'échantillon. Le dosage d'eau indique une teneur en eau d'environ 0,2 % après le test acide.

*Expression des résultats*

On mesure la perte de masse (PM) en % par la relation suivante :

$$PM = [(m_{polymère}° - m_{polymère}{}^f)/ m_{polymère}°] * 100 \pm 0.5\%$$

A titre de comparaison, on utilise un PA 66 de référence, caractérisé par GTC=77,2 meq/kg et GTA=43,5meq/kg, soit une Mn=16570 g/mol. On observe une perte de masse de 13,70 % avec une composition comprenant un polyamide 66 : les objets (granulés, ou poudre) sont fortement attaqués et on obtient en final une sorte de pâte.

Dans le cas des produits réalisés selon la composition de l'Exemple 1 (PA 66/6HIA de composition 95/5), on obtient aucune perte de masse (mesure +/-0,5%) : les objets (granulés, ou poudre) gardent totalement leur intégrité, et aucune attaque est détectable.

Dans le cas des produits réalisés selon la composition de l'Exemple 2 (PA 66/6HIA de composition 85/15), on obtient aucune perte de masse (mesure +/-0,01 %). : les objets (granulés, ou poudre) gardent totalement leur intégrité, et aucune attaque est détectable.

## Revendications

1. Utilisation d'un composé hydroxyaromatique pour augmenter la résistance aux acides d'un polyamide ou une composition polyamide, **caractérisée en ce que** le composé hydroxyaromatique est choisi dans le groupe comprenant : l'acide 2-hydroxytéréphtalique, l'acide 5-hydroxyisophtalique, l'acide 4-hydroxyisophtalique, l'acide 2,5-dihydroxytéréphtalique, l'acide 4-hydroxyphénylacétique ou l'acide gallique, l'acide 4-hydroxyphénylacétique, le 3,5-diaminophénol, le 5-hydroxy m-xylylène diamine, l'amino-3 phénol, l'amino-3 méthyl-4 phénol, et l'acide hydroxy-3 amino-5 benzoïque.

2. Utilisation de polyamide contenant des motifs hydroxyaromatiques chimiquement liés à la chaîne du polyamide pour augmenter la résistance aux acides d'une composition polyamide, **caractérisée en ce que** le composé hydroxyaromatique est choisi dans le groupe comprenant: l'acide 2-hydroxytéréphtalique, l'acide 5-hydroxyisophtalique, l'acide 4-hydroxyisophtalique, l'acide 2,5-dihydroxytéréphtalique, l'acide 4-hydroxyphénylacétique ou l'acide gallique, l'acide 4-hydroxyphénylacétique, le 3,5-diaminophénol, le 5-hydroxy m-xylylène diamine, l'amino-3 phénol, l'amino-3 méthyl-4 phénol, et l'acide hydroxy-3 amino-5 benzoïque.

3. Utilisation selon la revendication 2, **caractérisée en ce que** le polyamide contenant des motifs hydroxyaromatiques chimiquement liés à la chaîne du polyamide est obtenu par polymérisation ou par mélange en voie fondue.

4. Utilisation selon l'une quelconque des revendications 1 à 3, **caractérisée en ce que** le polyamide est choisi dans le groupe comprenant le polyamide 6, le polyamide 66, le polyamide 6.10, le polyamide 11, le polyamide 12, le polyamide 6.12, le poly(méta-xylylène adipamide), le polyamide 66/6T, le polyamide 66/6I, les mélanges et copolyamides.

5. Utilisation selon l'une quelconque des revendications 1 à 4, **caractérisée en ce que** la proportion molaire de composé hydroxyaromatique par rapport à l'ensemble des monomères constituants le polyamide est compris entre 0,1 et 100 %, préférentiellement entre 1 et 70 %, plus préférentiellement entre 0,5 et 60 %, encore plus préférentiellement comprise entre 2,5 et 50 %.

6. Utilisation selon l'une quelconque des revendications 1 à 5, **caractérisée en ce que** la proportion molaire de composé hydroxyaromatique par rapport à l'ensemble des monomères constituants le polyamide est compris entre 1 et 70 %.

7. Utilisation selon l'une quelconque des revendications 1 à 6, **caractérisée en ce que** la proportion molaire de composé hydroxyaromatique par rapport à l'ensemble des monomères constituants le polyamide est compris entre 0,5 et 60 %.

8. Utilisation selon l'une quelconque des revendications 1 à 7, **caractérisée en ce que** la proportion molaire de composé hydroxyaromatique par rapport à l'ensemble des monomères constituants le polyamide est compris entre 2,5 et 50 %.

9. Utilisation selon l'une quelconque des revendications 1 à 8, **caractérisée en ce que** la composition polyamide comprend au moins une charge de renfort et/ou de remplissage, choisie dans le groupe comprenant les fibres de verre, les fibres de carbone, les fibres aramides, les argiles, le kaolin, le mica, la wollastonite, la silice, le talc, le graphite, le carbure de silicium ou des nanoparticules.

10. Utilisation d'une composition selon l'une quelconque des revendications précédentes, en tant que filtre dans le domaine de la récupération de boues, liquides et gaz présents dans des réservoirs souterrains, et en particulier dans le domaine de l'extraction d'hydrocarbures, tels que le pétrole brut ou le gaz naturel.

11. Particule calibrée présentant une granulométrie moyenne (D50) comprise entre 0,2 et 2 mm selon la norme ISO 13320-1 comprenant du polyamide contenant des motifs hydroxyaromatiques chimiquement liés à la chaîne du polyamide, **caractérisée en ce que** le composé hydroxyaromatique est choisi dans le groupe comprenant : l'acide 2-hydroxytéréphtalique, l'acide 5-hydroxyisophtalique, l'acide 4-hydroxyisophtalique, l'acide 2,5-dihydroxytéréphtalique, l'acide 4-hydroxyphénylacétique ou l'acide gallique, l'acide 4-hydroxyphénylacétique, le 3,5-diaminophénol, le 5-hydroxy m-xylylène diamine, l'amino-3 phénol, l'amino-3 méthyl-4 phénol, et l'acide hydroxy-3 amino-5 benzoïque.

## Patentansprüche

1. Verwendung einer hydroxyaromatischen Verbindung zur Erhöhung der Säurebeständigkeit eines Polyamids oder einer Polyamidzusammensetzung, **dadurch gekennzeichnet, dass** die hydroxyaromatische Verbindung aus der Gruppe umfassend 2-Hydroxyterephthalsäure, 5-Hydroxyisophthalsäure, 4-Hydroxyisophthalsäure, 2,5-Dihydroxyterephthalsäure, 4-Hydroxyphenylessigsäure oder Gallussäure, 4-Hydroxyphenylessigsäure, 3,5-Diaminophenol, 5-Hydroxy-m-xylylendiamin, 3-Aminophenol, 3-Amino-4-methylphenol und 3-Hydroxy-5-aminobenzoesäure ausgewählt ist.

2. Verwendung von Polyamid, das chemisch an die Polyamidkette gebundene hydroxyaromatische Einheiten enthält, zur Erhöhung der Säurebeständigkeit einer Polyamidzusammensetzung, **dadurch gekennzeichnet, dass** die hydroxyaromatische Verbindung aus der Gruppe umfassend 2-Hydroxyterephthalsäure, 5-Hydroxyisophthalsäure, 4-Hydroxyisophthalsäure, 2,5-Dihydroxyterephthalsäure, 4-Hydroxyphenylessigsäure oder Gallussäure, 4-Hydroxyphenylessigsäure, 3,5-Diaminophenol, 5-Hydroxy-m-xylylendiamin, 3-Aminophenol, 3-Amino-4-methylphenol und 3-Hydroxy-5-aminobenzoesäure ausgewählt ist.

3. Verwendung nach Anspruch 2, **dadurch gekennzeichnet, dass** das Polyamid, das chemisch an die Polyamidkette gebundene hydroxyaromatische Einheiten enthält, durch Polymerisation oder durch Mischen in der Schmelze erhalten wird.

4. Verwendung nach einem der Ansprüche 1 bis 3, **dadurch gekennzeichnet, dass** das Polyamid aus der Gruppe umfassend Polyamid 6, Polyamid 66, Polyamid 6.10, Polyamid 11, Polyamid 12, Polyamid 6.12, Poly-(meta-xylylenadipamid), Polyamid 66/6T, Polyamid 66/61, Mischungen und Copolyamiden ausgewählt ist.

5. Verwendung nach einem der Ansprüche 1 bis 4, **dadurch gekennzeichnet, dass** der Molanteil der hydroxyaromatischen Verbindung, bezogen auf alle Aufbaumonomere des Polyamids, zwischen 0,1 und 100 %, vorzugsweise zwischen 1 und 70 %, weiter bevorzugt zwischen 0,5 und 60 % und noch weiter bevorzugt zwischen 2,5 und 50 % liegt.

6. Verwendung nach einem der Ansprüche 1 bis 5, **dadurch gekennzeichnet, dass** der Molanteil der hydroxyaromatischen Verbindung, bezogen auf alle Aufbaumonomere des Polyamids, zwischen 1 und 70 % liegt.

7. Verwendung nach einem der Ansprüche 1 bis 6, **dadurch gekennzeichnet, dass** der Molanteil der hydroxyaromatischen Verbindung, bezogen auf alle Aufbaumonomere des Polyamids, zwischen 0,5 und 60 % liegt.

8. Verwendung nach einem der Ansprüche 1 bis 7, **dadurch gekennzeichnet, dass** der Molanteil der hydroxyaromatischen Verbindung, bezogen auf alle Aufbaumonomere des Polyamids, zwischen 2,5 und 50 % liegt.

9. Verwendung nach einem der Ansprüche 1 bis 8, **dadurch gekennzeichnet, dass** die Polyamidzusammensetzung mindestens einen verstärkenden und/oder streckenden Füllstoff aus der Gruppe umfassend Glasfasern, Kohlefasern, Aramidfasern, Tone, Glimmer, Wollastonit, Siliciumdioxid, Talk, Graphit, Siliciumcarbid oder Nanopartikel umfasst.

10. Verwendung einer Zusammensetzung nach einem der vorhergehenden Ansprüche als Filter auf dem Gebiet der Gewinnung von in unterirdischen Reservoiren vorliegenden Schlämmen, Flüssigkeiten und Gasen und insbesondere auf dem Gebiet der Extraktion von Kohlenwasserstoffen, wie Rohöl oder Erdgas.

11. Kalibriertes Teilchen mit einer mittleren Teilchengröße (D50) zwischen 0,2 und 2 mm gemäß ISO-Norm 13320-1, umfassend Polyamid, das chemisch an die Polyamidkette gebundene hydroxyaromatische Einheiten enthält, **dadurch gekennzeichnet, dass** die hydroxyaromatische Verbindung aus der Gruppe umfassend 2-Hydroxyterephthalsäure, 5-Hydroxyisophthalsäure, 4-Hydroxyisophthalsäure, 2,5-Dihydroxyterephthalsäure, 4-Hydroxyphenylessigsäure oder Gallussäure, 4-Hydroxyphenylessigsäure, 3,5-Diaminophenol, 5-Hydroxy-m-xylylendiamin, 3-Aminophenol, 3-Amino-4-methylphenol und 3-Hydroxy-5-aminobenzoesäure ausgewählt ist.

**Claims**

1. Use of a hydroxyaromatic compound for increasing the resistance to acids of a polyamide or a polyamide composition, **characterized in that** the hydroxyaromatic compound is chosen from the group consisting of : 2-hydroxyterephthalic acid, 5-hydroxyisophthalic acid, 4-hydroxyisophthalic acid, 2,5-dihydroxyterephthalic acid, 4-hydroxyphenylacetic acid or gallic acid, 4-hydroxyphenylacetic acid, 3,5-diaminophenol, 5-hydroxy-m-xylylenediamine, 3-aminophenol, 3-amino-4-methylphenol and 3-hydroxy-5-aminobenzoic acid.

2. Use of polyamide comprising hydroxyaromatic units chemically bonded to the chain of the polyamide in order to increase the resistance to acids of a polyamide composition, **characterized in that** the hydroxyaromatic compound is chosen from the group consisting of : 2-hydroxyterephthalic acid, 5-hydroxyisophthalic acid, 4-hydroxyisophthalic acid, 2,5-dihydroxyterephthalic acid, 4-hydroxyphenylacetic acid or gallic acid, 4-hydroxyphenylacetic acid, 3,5-diaminophenol, 5-hydroxy-m-xylylenediamine, 3-aminophenol, 3-amino-4-methylphenol and 3-hydroxy-5-aminobenzoic acid.

3. Use according to Claim 2, **characterized in that** the polyamide comprising hydroxyaromatic units chemically bonded to the chain of the polyamide is obtained by polymerization or by melt blending.

4. Use according to any one of Claims 1 to 3, **characterized in that** the polyamide is chosen from the group consisting of polyamide 6, polyamide 6.6, polyamide 6.10, polyamide 11, polyamide 12, polyamide 6.12, poly(m-xylylene adipamide), polyamide 6.6/6.T, polyamide 6.6/6.I, and the blends and copolyamides.

5. Use according to any one of Claims 1 to 4, **characterized in that** the molar proportion of hydroxyaromatic compound, with respect to all the monomers forming the polyamide, is between 0.1 and 100 %, preferably between 1 and 70 %, more preferably between 0.5 and 60 % and more preferably still between 2.5 and 50 %.

6. Use according to any one of Claims 1 to 5, **characterized in that** the molar proportion of hydroxyaromatic compound, with respect to all the monomers forming the polyamide, is between 1 and 70 %.

7. Use according to any one of Claims 1 to 6, **characterized in that** the molar proportion of hydroxyaromatic compound, with respect to all the monomers forming the polyamide, is between 0.5 and 60 %.

8. Use according to any one of Claims 1 to 7, **characterized in that** the molar proportion of hydroxyaromatic compound, with respect to all the monomers forming the polyamide, is between 2.5 and 50 %.

9. Use according to any one of Claims 1 to 8, **characterized in that** the polyamide composition comprises at least one reinforcing and/or bulking filler chosen from the group consisting of glass fibres, carbon fibres, aramid fibres, clays, kaolin, mica, wollastonite, silica, talc, graphite, silicon carbide and nanoparticles.

10. Use of a composition according to any one of the preceding claims, as filter in the field of the recovery of sludges, liquids and gases present in underground reservoirs and in particular in the field of the extraction of hydrocarbons, such as crude oil or natural gas.

11. Graded particle, exhibiting a mean particle size (D50) of between 0.2 and 2 mm according to Standard ISO 13320-1, comprising polyamide comprising hydroxyaromatic units chemically bonded to the chain of the polyamide, **characterized in that** the hydroxyaromatic compound is chosen from the group consisting of : 2-hydroxyterephthalic acid, 5-hydroxyisophthalic acid, 4-hydroxyisophthalic acid, 2,5-dihydroxyterephthalic acid, 4-hydroxyphenylacetic acid or gallic acid, 4-hydroxyphenylacetic acid, 3,5-diaminophenol, 5-hydroxy-m-xylylenediamine, 3-aminophenol, 3-amino-4-methylphenol and 3-hydroxy-5-aminobenzoic acid.